# EUROPEAN PATENT APPLICATION

(11) **EP 0 558 763 A1**
(43) Date of publication of application: **08.09.1993**
(21) Application number: 92920355.2
(22) Date of filing: 25.09.1992
(51) Int. Cl.: C09K 5/04, F25B 1/00

(54) **REFRIGERANT AND REFRIGERATOR**

(30) Priority: 25.09.1991 JP 245935/91
(71) Applicant: DAIKIN INDUSTRIES, LTD., Kita-ku, Osaka 530 (JP)
(72) Inventor: OMURE, Yukio Yodogawa Seisakusho Daikinkogyo, Osaka 566 (JP); NOGUCHI, Masahiro Yodogawa Seisakusho Daikinkogyo, Osaka 566 (JP); FUJIWARA, Katsuki Yodogawa Seisakusho Daikinkogyo, Osaka 566 (JP); MOMOTA, Hiroshi Yodogawa Seisakusho Daikinkogyo, Osaka 566 (JP)
(74) Representative: Schüler, Horst, Dr.
(86) International application number: JP9201216
(87) International publication number: WO9306187

(57) **Abstract**

A refrigerant comprising 1,1,1,4,4,4-hexafluorobutane and a refrigerator using 1,1,1,4,4,4-hexafluorobutane as the refrigerant.

## Description

### TECHNICAL FIELD

The present invention relates to a novel refrigerant and a refrigerating machine utilizing the refrigerant.

### BACKGROUND ART

As the working fluid or refrigerant, chlorofluoroalkanes, azeotropic mixtures thereof, and compositions analogous thereto are known. Among them, CFC11(trichlorofluoromethane), CFC12(dichlorodifluoromethane), CFC114(1,2-dichloro-1,1,2,2-tetrafluoroethane) and HCFC22(chlorodifluoromethane) have been used most commonly as refrigerator working fluids. However, once released into the atmosphere, these chlorofluoroalkanes ascend to the stratosphere in intact form because of their stability against decomposition and generate Cℓ radicals there to destroy the ozone layer of the stratosphere to inflict serious damages on the earth ecology including man. Therefore, the use and production of these ozone-malignant chlorofluoroalkanes have come to be restricted by international conventions. Among the chlorofluoroalkanes subject to control are CFC11, CFC12 and CFC114.

Of the above chlorofluoroalkanes, HCFC22 is currently not subject to control because of its fairly low ozone depletion potentials (hereinafter referred to briefly as ODP) in comparison with the controlled substances mentioned above (e.g. about 1/20 compared with CFC11) but it is generally expected that this compound, too, will be ultimately replaced with compounds having an ODP value of zero.

With the popular use of air conditioning-refrigeration equipment, the demand for which is increasing year by year, any restriction on the use and production of the refrigerant would have significant impacts on all the existing social mechanisms inclusive of various ecosystems and those for the storage and transportation of food. Therefore, a true and urgent need is being felt for the development of new refrigerants having no risk or only a drastically reduced risk for causing the above-mentioned problem of ozone depletion.

As compounds promising to be useful substitutes for the above-mentioned chlorofluoroalkanes (hereinafter referred to as candidate substitute compounds), there are known several hydrogen-containing chlorofluoroalkanes and fluoroalkanes, such as HFC21 (dichloromonofluoromethane), HFC23(trifluoromethane), HFC32(difluoromethane), HFC 124(monochlorotetrafluoro- methane), HFC125 (pentafluoroethane), HCFC133a(monochlorotrifluoroethane), HFC134a(tetrafluoroethane), HCFC142b (monochlorodifluoroethane) and HFC143a(trifluoro-ethane).

However, none of these candidate substitute compounds can independently satisfy all the performance requirements of a refrigerant, in terms of ODP, non-flammability and so on.

Therefore, it might be contemplated with reason to use two or more of them in combination. However, when an unconsidered simple mixture of them is used as the refrigerant, a change in composition due to change of phase, i.e. evaporation and condensation, in the heat exchanger is unavoidable so that the operation reliability of the refrigeration equipment cannot be insured.

The following azeotropic systems are known.
R500 ... CFC12/HFC152a = 78.3/26.2 in weight %
R502 ... HCFC22/CFC115 = 48.8/51.2 in weight %
R503 ... CFC13/HFC23 = 59.9/40.1 in weight %
R504 ... HFC32/CFC115 = 48.2/51.8 in weight %
However, since they contain chlorine, the trend is that the use of these refrigerants will also be restricted in not a too distant future.

### Disclosure of Invention

The primary object of the present invention is to provide a refrigerant featuring an ODP value of zero, yet having excellent refrigerating properties and being substantially free of the above-mentioned change in composition associated with a change of phase in the running of machinery.

The inventors have been engaged in intensive research with the eye set on the foregoing state of the art. As a result, the inventors discovered that 1,1,1,4,4,4-hexafluorobutane has qualities required to accomplish the above-mentioned object.

The present invention provides a refrigerant comprising 1,1,1,4,4,4-hexafluorobutane.

The invention further provides a refrigerating machine utilizing 1,1,1,4,4,4-hexafluorobutane as the refrigerant.

The main physical properties of 1,1,1,4,4,4-hexafluorobutane, which are used in the present invention, are presented below in Table 1.

**Table 1**

| | |
|---|---|
| Molecular weight | 166 |
| Boiling point (°C) | 25 |
| Critical temperature (°C) | 160 |
| Critical pressure (kg/cm²·a) | 30.3 |
| Latent heat of evaporation (kcal/kg:0°C) | 40.7 |
| Ozone depletion potential | 0 |

Where necessary, stabilizers can be incorporated in the refrigerant of the invention. Thus, where a high degree of stability is required for rugged conditions of service, the following and other stabilizers can be added.
- epoxides such as propylene oxide, 1,2-butylene oxide, glycidol, etc.,
- phosphites such as dimethyl phosphite, diisopropyl phosphite, diphenyl phosphite, etc.,
- thiophosphites such as trilauryl trithiophosphite etc.,
- phosphine sulfides such as triphenoxyphosphine sulfide, trimethylphosphine sulfide, etc.,
- boron compounds such as boric acid, triethyl borate, triphenyl borate, phenylboric acid, diphenylboric acid, etc.,
- phenols such as 2,6-di-tert-butyl-p-cresol etc.,
- nitroalkanes such as nitromethane, nitroethane, etc.,
- acrylic acid esters such as methyl acrylate, ethyl acrylate, etc.,
- dioxane, tert-butanol, pentaerythritol, p-isopropenyltoluene and so on.

These stabilizers are generally added in a proportion of about 0.01 to 5% based on the weight of the refrigerant.

Furthermore, within the range not affecting the object and effects of the present invention, other compounds can be added to the refrigerant of the invention. Among such other compounds can be reckoned ethers such as dimethyl ether, pentafluorodimethylether, etc., amines such as perfluoroethylamine etc., and LPG.

### Effects of Invention

The 1,1,1,4,4,4-hexafluorobutane of the invention is easily decomposed and does not contain chlorine which might affect the ozone layer so that it has no ozone depletion potential, viz. ODP=zero.

The refrigerant of the present invention is excellent as a whole with a relatively great refrigeration capacity corresponding to about 80% of that of CFC11 and a coefficient of performance comparable to that of CFC11. Therefore, this refrigerant is a useful substitute for CFC11 which is currently used, for example as a turbo compressor refrigerant.

Since the refrigerant of the present invention is a simple substance, it offers advantages in liquid control and recovery and reuse.

The refrigerant of the present invention is only sparingly solubilizing high molecular compounds, so that the existing refrigerators can be used as they are without need for change in the structural materials.

The refrigerant of the present invention is highly compatible with PAG (polyalkylene glycol) oil, poly-ester oil and so on.

The refrigerant of the invention is nonflammable and satisfactory in thermal stability.

### Best Mode for Carrying Out the Invention

The following examples and comparative examples are intended to point out the meritorious characteristics of the invention in further detail.

### Example 1

A 1-HP refrigerator employing the refrigerant of the invention was operated under the running conditions of a refrigerant vaporization temperature of 5°C, a condensation temperature of 40°C, a compressor inlet superheating temperature of 10°C and a condensor exit supercooling temperature of 5°C.

As the refrigerator machine oil, polyalkylene glycol was employed.

Table 2 shows the coefficient of performance (COP), refrigerating capacity (kcal/m³) and compressor gas discharge temperature (°C).

Table 2 also shows the corresponding data on CFC11, as a control refrigerant.

**Table 2**

| | COP | Refrigerating capacity (kcal/m³) (°C) | Compressor gas discharge temperature |
|---|---|---|---|
| This invention | 7.1 | 105 | 40 |
| (CFC11) | 7.3 | 130 | 52 |

It is apparent from Table 2 that compared with CFC11, the refrigerant of the present invention has a well-balanced combination of characteristics.

## Claims

1. A refrigerant comprising 1,1,1,4,4,4-hexafluorobutane.

2. A refrigerating machine using 1,1,1,4,4,4-hexafluorobutane as the refrigerant.
